# EUROPÄISCHE PATENTSCHRIFT

(11) **EP 1 735 363 B1**
(45) Veröffentlichungstag und Bekanntmachung des Hinweises auf die Patenterteilung: **02.01.2008**
(21) Anmeldenummer: 05735128.0
(22) Anmeldetag: 19.03.2005
(51) Int. Cl.: C08G 18/10, C08G 18/78, C08G 18/48

(54) **VERFÄRBUNGSSTABILE POLYETHERALLOPHANATE**
DISCOLOURATION-RESISTANT POLYETHER ALLOPHANATES
ALLOPHANATES DE POLYETHERS RESISTANT A LA DECOLORATION

(30) Priorität: 01.04.2004 DE 102004015985
(43) Veröffentlichungstag der Anmeldung: 27.12.2006
(73) Patentinhaber: Bayer MaterialScience AG, 51368 Leverkusen (DE)
(72) Erfinder: MAGER, Michael, 51375 Leverkusen (DE); SIMON, Joachim, 40589 Düsseldorf (DE); HOMANN, Malte, 51519 Odenthal (DE)
(86) Internationale Anmeldenummer: PCT/EP2005/002954
(87) Internationale Veröffentlichungsnummer: WO 2005/095481

(56) Entgegenhaltungen:
- EP-A- 0 312 365
- EP-A- 0 682 012

## Beschreibung

Die Erfindung betrifft ein Verfahren zur Herstellung von verfärbungsstabilen Polyisocyanat-Prepolymeren mit Allophanat-Struktureinheiten durch Verwendung spezieller Polyether, die so zugänglichen Verfahrenprodukte sowie deren Verwendung zur Herstellung von Polyurethanen und Polyharnstoffen.

Polyisocyanat-Prepolymere mit Allophanat-Struktureinheiten sind insbesondere deshalb interessant, weil sie bei vergleichsweise niedriger Viskosität einen hohen NCO-Gehalt aufweisen. Sie stellen wertvolle Vernetzer für zweikomponentige Polyurethansysteme dar, mit blockierten NCO-Gruppen können sie darüber hinaus auch in Einkomponenten-Polyurethansystemen eingesetzt werden. Derartige Polyurethansysteme werden in der Regel zur Herstellung von Beschichtungen eingesetzt.

Polyisocyanat-Prepolymere mit Allophanat-Struktureinheiten sind prinzipiell bekannt. So sind in EP-A 0 682 012 u.a. Prepolymere auf Basis von 1-4 Hydroxylgruppen aufweisenden Polyethern und Diisocyanaten beschrieben, welche unter Verwendung von Zinn(II)-Verbindungen mit einem Überschuss der Diisocyanate zu den entsprechenden Allophanaten umgesetzt werden.

Nach den beschriebenen Verfahren werden jedoch häufig Polyisocyanat-Prepolymere erhalten, welche bei Lagerung, insbesondere bei höheren Temperaturen, eine deutliche farbliche Veränderung zeigen. Darüber hinaus nimmt bei besagter Lagerung häufig der NCO-Gehalt der Produkte ab und deren Viskosität erheblich zu. Da die Polyisocyanat-Prepolymere mit Allophanat-Struktureinheiten in der Regel durch Dünnschichtverdampfung bei hohen Temperaturen (z.B. 160°C) von überschüssigem Diisocyanat befreit werden, treten die genannten Veränderungen (Farbe, NCO-Gehalt und Viskosität) häufig schon bei der Herstellung auf.

Aufgabe der vorliegenden Erfindung war daher die Bereitstellung von neuen Polyisocyanat-Prepolymeren mit Allophanat-Struktureinheiten mit deutlich verbesserter Lagerstabilität, insbesondere verbesserter Farbstabilität.

Überraschend wurden nun gefunden, dass Polyisocyanat-Prepolymere mit Allophanat-Struktureinheiten hergestellt aus speziellen Polyetherpolyolen mit einem geringen Anteil an ungesättigten Gruppen die zuvor genannten Nachteile nicht aufweisen und insbesondere eine deutlich bessere Farbstabilität aufweisen.

Gegenstand der vorliegenden Erfindung ist daher ein Verfahren zur Herstellung von Polyisocyanat-Prepolymeren mit Allophanat-Struktureinheiten, bei dem
a) ein oder mehrere Polyisocyanate mit
b) einem oder mehreren Polyetherpolyolen, die einen Gehalt an ungesättigten Endgruppen von kleiner oder gleich 0,02 Milliäquivalenten pro Gramm Polyol, (Bestimmungsmethode ASTM D2849-69), eine Polydispersität (PD = M_{w}/Mₙ) von 1,0 bis 1,5 und/oder eine OH-Funktionalität von größer oder gleich 1,9 aufweisen,
   zu einem NCO-funktionellen Polyurethan-Prepolymer umgesetzt werden, dessen so gebildete Urethangruppen unter weiterer Umsetzung mit
c) Polyisocyanaten, welche verschieden von denen aus a) sein können und
d) Katalysatoren
   teilweise oder vollständig allophanatisiert werden und vor, während und/oder nach der Allophanatisierung
e) gegebenenfalls saure Additive
   zugegeben werden.

Ebenfalls Gegenstand der vorliegenden Erfindung sind die nach dem erfindungsgemäßen Verfahren hergestellten Polyisocyanat-Prepolymere mit Allophanat-Struktureinheiten.

Geeignete Polyisocyanate der Komponenten a) und c) sind die dem Fachmann an sich bekannten organischen aliphatischen, cycloaliphatischen, aromatischen oder heterocyclischen Polyisocyanate mit mindestens zwei Isocyanatgruppen pro Molekül sowie Gemische davon.

Beispiele für geeignete aliphatische bzw. cycloaliphatische Polyisocyanate sind Di- oder Triisocyanate wie z.B. Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) oder cyclische Systeme, wie z.B. 4,4'-Methylenbis(cyclohexylisocyanat), 3,5,5-Trimethyl-1-isocyanato-3-isocyanatomethylcyclohexan (Isophorondiisocyanat, IPDI) sowie ω.ω'-Diisocyanato-1,3-dimethylcyclohexan (H₆XDI).

Als aromatische Polyisocyanate können z.B. 1,5-Naphthalendiisocyanat, die isomeren Diisocyanatodiphenylmethane (MDI) bzw. deren höhermolekularen Derivate, Diisocyanatomethylbenzol (2,4- und 2,6-Toluylendiisocyanat, TDI), insbesondere das 2,4- und das 2,6-Isomere und technische Gemische der beiden Isomeren sowie 1,3-Bis(isocyanatomethyl)benzol (XDI) eingesetzt werden.

Bevorzugt ist jedoch die Verwendung von aliphatischen und/oder cycloaliphatischen Diisocyanaten der vorstehend genannten Art als Bestandteil der Komponenten a) und c).

Besonders bevorzugt werden in den Komponenten a) und c) Hexandiisocyanat (Hexamethylendiisocyanat, HDI), 4,4'-Methylenbis(cyclohexylisocyanat) und/oder 3,5,5-Trimethyl-1-isocyanato-3-isocyanatomethylcyclohexan (Isophorondiisocyanat, IPDI) als Polyisocyanate eingesetzt. Ein ganz besonders bevorzugtes Polyisocyanat ist HDI.

Bevorzugt werden in a) und c) die gleichen Polyisocyanate eingesetzt.

Die Polyetherpolyole der Komponente b) haben zahlenmittlere Molekulargewichte Mₙ von 300 bis 20 000 g/mol, bevorzugt 1000 bis 12000 g/mol, besonders bevorzugt 1000 bis 4000 g/mol.

Ferner weisen sie einen Gehalt an ungesättigten Endgruppen von kleiner oder gleich 0,02 Milliäquivalenten pro Gramm Polyol (meq/g), bevorzugt kleiner oder gleich 0,015 meq/g, besonders bevorzugt kleiner oder gleich 0,01 meq/g (Bestimmungsmethode ASTM D2849-69) auf.

Des Weiteren haben sie eine besonders enge Molekulargewichtsverteilung, d.h. eine Polydispersität (PD = M_{w}/Mₙ) von 1,0 bis 1,5 und/oder eine OH-Funktionalität ≥ 1,9. Bevorzugt weisen die genannten Polyetherpolyole eine Polydispersität von 1,0 bis 1,5 und eine OH-Funktionalität von größer 1,9 auf, besonders bevorzugt größer oder gleich 1,95 auf.

Die erfindungsgemäß einzusetzenden Polyether haben dabei bevorzugt OH-Funktionalitäten von <6, besonders bevorzugt <4.

Solche Polyetherpolyole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Dies ist z.B. in der US-A 5 158 922 (z.B. Beispiel 30) und EP-A 0 654 302 (S. 5, Z. 26 bis S. 6, Z. 32) beschrieben.

Geeignete Starter-Moleküle für die Herstellung der Polyetherpolyole sind beispielsweise einfache, niedermolekulare Polyole, Wasser, organische Polyamine mit mindestens zwei N-H-Bindungen oder beliebige Gemische derartiger Starter-Moleküle. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Bevorzugte Starter-Moleküle sind einfache Polyole wie Ethylenglykol, Propylenglykol-1,3- und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren oder niedermolekulare Ethoxylierungs- oder Propoxylierungsprodukte derartiger einfacher Polyole oder beliebige Gemische derartiger hydroxygruppenhaltiger Verbindungen.

Die Herstellung der isocyanatgruppenhaltigen Polyurethan-Prepolymere erfolgt durch Umsetzung der Polyetherpolyole der Komponente b) mit überschüssigen Mengen der Polyisocyanate aus a). Die Umsetzung erfolgt im Allgemeinen bei Temperaturen von 20 bis 140°C, bevorzugt bei 40 bis 100°C, gegebenenfalls unter der Verwendung von aus der Polyurethanchemie an sich bekannten Katalysatoren wie beispielsweise Zinn-Seifen, z.B. Zinn(II)bis(2-ethylhexanoat), Organozinn-Verbindungen, z.B. Dibutylzinndilaurat, oder tertiären Aminen, z.B. Triethylamin oder Diazabicyclooctan.

Die Allophanatisierung erfolgt dann anschließend durch Umsetzung der Isocyanatgruppen-haltigen Polyurethan-Prepolymere mit Polyisocyanaten c), welche gleich oder verschieden zu denen der Komponente a) sein können, wobei geeignete Katalysatoren d) zur Allophanatisierung zugesetzt werden. Typischerweise werden anschließend zur Stabilisierung die sauren Additive der Komponente e) zugesetzt und überschüssiges Polyisocyanat, z.B. durch Dünnschichtdestillation oder Extraktion aus dem Produkt entfernt.

Das Molverhältnis der OH-Gruppen der Verbindungen der Komponente b) zu den NCO-Gruppen der Polyisocyanate aus a) und c) beträgt bevorzugt 1 : 1,5 bis 1 : 20, besonders bevorzugt 1 : 2 bis 1 : 15, ganz besonders bevorzugt 1 : 5 bis 1 : 15.

Geeignete Katalysatoren d) für die Allophanatisierung sind beispielsweise Zink-, Zinn- und Zirkonium-Verbindungen, wobei bevorzugt Zink- und Zinn-Verbindungen eingesetzt werden. Besonders bevorzugte Zinn- und Zink-Verbindungen sind Zinn(II)-Salze wie beispielsweise die Sn(II)dihalogenide, Zinn- oder Zink-Seifen wie Sn(II)bis(2-ethylhexanoat), Sn(II)bis(n-octoat), Zn(II)bis(2-ethylhexanoat) und Zn(II)bis(n-octoat) sowie Organozinn-Verbindungen. Ganz besonders bevorzugt ist Zn(II)bis(2-ethylhexanoat).

Diese Allophanatisierungskatalysatoren werden typischerweise in Mengen von bis zu 5 Gew.-%, bezogen auf die gesamte Reaktionsmischung, eingesetzt. Bevorzugt werden 5 bis 500 ppm des Katalysators, besonders bevorzugt 20 bis 200 ppm, eingesetzt.

Als saure Additive der Komponente e) können Lewis-Säuren (Elektronenmangelverbindungen) oder Broenstedt-Säuren (Protonensäuren) oder solche Verbindungen sein, welche unter Reaktion mit Wasser derartige Säuren freisetzen.

Dies können beispielsweise anorganische oder organische Säuren oder auch neutrale Verbindungen wie Säurehalogenide oder Ester sein, welche mit Wasser zu den entsprechenden Säuren reagieren. Genannt seien hier insbesondere Salzsäure, Phosphorsäure, Phosphorsäureester, Benzoylchlorid, Isophtalsäuredichlorid, p-Toluolsulfonsäure, Ameisensäure, Essigsäure, Dichloressigsäure und 2-Chlorpropionsäure.

Sofern überhaupt saure Additive verwendet werden, sind dies bevorzugt organische Säuren wie Carbonsäuren oder Säurehalogenide wie Benzoylchlorid oder Isophtalyldichlorid.

Die sauren Additive werden in der Regel mindestens in einer solchen Menge zugegeben, dass das Molverhältnis der sauren Zentren der sauren Additive zu den katalytisch aktiven Zentren des Katalysators mindestens 1:1 beträgt. Vorzugsweise wird jedoch ein Überschuss der sauren Additive zugesetzt.

Die Dünnschichtdestillation ist das bevorzugte Verfahren zur Abtrennung von überschüssigem Diisocyanat, und sie wird in der Regel bei Temperaturen von 100 bis 160°C und einem Druck von 0,01 bis 3 mbar durchgeführt. Der Restmonomergehalt beträgt danach bevorzugt weniger als 1 Gew.-%, besonders bevorzugt weniger als 0,5 Gew.-% (Diisocyanat).

Die gesamten Verfahrensschritte können gegebenenfalls in Anwesenheit inerter Lösungsmittel durchgeführt werden. Als inerte Lösungsmittel sind dabei solche zu verstehen, die unter den gegebenen Reaktionsbedingungen nicht mit den Edukten reagieren. Beispiele sind Ethylacetat, Butylacetat, Methoxypropylacetat, Methylethylketon, Methylisobutylketon, Toluol, Xylol, aromatische oder (cyclo-) aliphatische Kohlenwasserstoffgemische oder beliebige Gemische derartiger Lösungsmittel. Bevorzugt werden die erfindungsgemäßen Umsetzungen jedoch lösemittelfrei durchgeführt.

Die Zugabe der beteiligten Komponenten kann sowohl bei der Herstellung der isocyanatgruppenhaltigen Prepolymere als auch bei Allophanatisierung in beliebiger Reihenfolge erfolgen. Bevorzugt ist jedoch die Zugabe des Polyetherpolyols b) zum vorgelegten Polyisocyanat der Komponenten a) und c) und schließlich die Zugabe des Allophanatisierungs-Katalysators d).

In einer bevorzugten Ausführungsform der Erfindung werden die Polyisocyanate der Komponenten a) und c) in einem geeigneten Reaktionsgefäß vorgelegt und, gegebenenfalls unter Rühren, auf 40 bis 100°C erwärmt. Nach Erreichen der gewünschten Temperatur werden unter Rühren dann die Polyhydroxyverbindungen der Komponente b) zugegeben und solange gerührt, bis der theoretische NCO-Gehalt des nach der gewählten Stöchiometrie zu erwartenden Polyurethan-Prepolymers erreicht oder geringfügig unterschritten ist. Jetzt wird der Allophanatisierungs-Katalysator d) zugegeben und die Reaktionsmischung solange auf 50 und 100°C ewärmt, bis der gewünschte NCO-Gehalt erreicht oder geringfügig unterschritten ist. Anschließend können zur Stabilisierung die sauren Additive der Komponente e) zugegeben werden bevor das Reaktionsgemisch abgekühlt oder direkt der Dünnschichtdestillation zugeführt wird. Dabei wird das überschüssige Polyisocyanat bei Temperaturen von 100 bis 160°C und einem Druck von 0,01 bis 3 mbar bis auf einen Restmonomergehalt von weniger als 1 %, bevorzugt weniger als 0,5 %, abgetrennt. Nach der Dünnschichtdestillation können gegebenenfalls weitere saure Additive der Komponente e) als Stabilisator zugegeben werden.

Die in dem beanspruchten Verfahren gebildeten Allophanate entsprechen typischerweise der allgemeinen Formel (I), 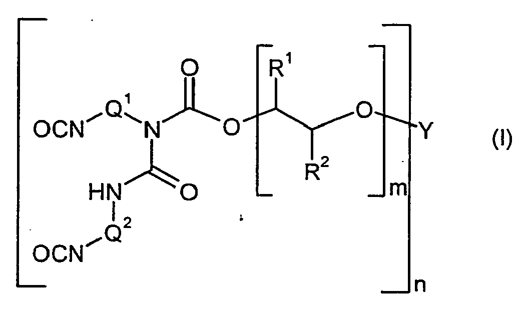 worin
- Q¹ und Q²: unabhängig voneinander für den Rest eines linearen und/oder cyclischen aliphatischen Diisocyanats der genannten Art, bevorzugt -(CH₂)₆-, stehen,
- R¹ und R²: unabhängig voneinander für Wasserstoff oder einen C₁-C₄-Alkylrest stehen, wobei R¹ und R² bevorzugt Wasserstoff und/oder Methylgruppen sind,
- Y: der Rest eines Starter-Moleküls der genannten Art mit einer Funktionalität von 2 bis 6 ist, und somit
- n: für einen Wert von 2 bis 6 steht, welche durch Verwendung von verschiedenen Starter-Molekülen selbstverständlich auch keine ganze Zahl sein muss, sowie
- m: bevorzugt so vielen Monomereinheiten entspricht, dass das zahlenmittlere Molekulargewicht des der Struktur zugrunde liegenden Polyethers 300 bis 20000 g/mol beträgt.

Vorzugsweise werden Allophanate erhalten, welche der allgemeinen Formel (II) entsprechen, 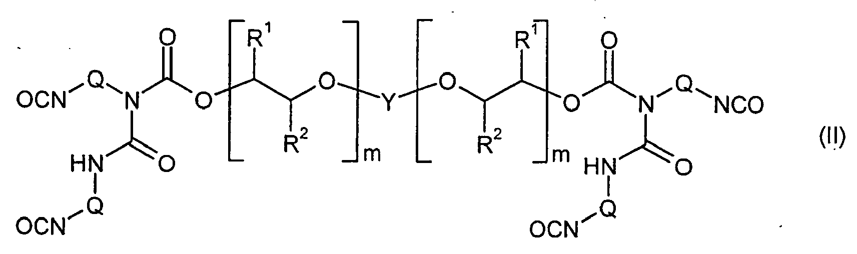 worin
- Q: für den Rest eines linearen und/oder cyclischen aliphatischen Diisocyanats der genannten Art, bevorzugt -(CH₂)₆-, steht,
- R¹ und R²: unabhängig voneinander für Wasserstoff oder für einen C₁-C₄-Alkylrest stehen, wobei R¹ und R² bevorzugt Wasserstoff und/oder Methylgruppen sind,
- Y: für den Rest eines difunktionellen Starter-Moleküls der genannten Art steht und
- m: so vielen Monomereinheiten entspricht, dass das zahlenmittlere Molekulargewicht des der Struktur zugrunde liegenden Polyethers 300 bis 20000 g/mol beträgt.

Die erfindungsgemäß stabilisierten Allophanate haben typischerweise gewichtsmittlere Molekulargewichte von 700 bis 50000 g/mol, bevorzugt 1500 bis 15000 g/mol und besonders bevorzugt 1500 bis 8000 g/mol.

Die erfindungsgemäß stabilisierten Allophanate haben typischerweise Viskositäten bei 23°C von 500 bis 100000 mPas, bevorzugt 500 bis 50000 mPas und besonders bevorzugt von 1000 bis 7500 mPas, ganz besonders bevorzugt von 1000 bis 3500 mPas.

Die erfindungsgemäß stabilisierten Allophanate können beispielsweise zur Herstellung von Polyurethanen, Polyharnstoffen oder Polyurethanharnstoffen eingesetzt werden, indem man sie mit geeigneten Polyolen bzw. Polyaminen oder auch einer Mischung aus beidem zur Reaktion bringt.

Die Umsetzung kann dabei bei Raumtemperatur oder darunter, aber auch bei erhöhten Temperaturen erfolgen (Einbrennen). Die so erhaltenen Polyurethane bzw. Polyharnstoffe sind ihrerseits wieder besonders geeignet als Beschichtung.

Daher sind Beschichtungsmittel ein weiterer Gegenstand der Erfindung, welche
A) ein oder mehrere der erfindungsgemäßen Allophanate und
B) mindestens ein Di- oder Polyol und/oder
C) mindestens ein lineares und/oder cyclisches, aliphatisches, araliphatisches und/oder aromatisches Di- oder Polyamin
enthalten.

Die nach dem erfindungsgemäßen Verfahren hergestellten Allophanate zeichnen sich durch eine sehr gute Verträglichkeit mit den zuvor genannten Komponenten B) und C) aus. Insbesondere führt die Kombination von A) und C) zu homogenen (Polyharnstoff-) Beschichtungen.

Die genannten Beschichtungsmittel können mit den an sich bekannten Techniken wie Sprühen, Tauchen, Fluten oder Gießen auf Oberflächen appliziert werden. Nach dem Ablüften gegebenenfalls vorhandener Lösungsmittel, härten die Beschichtungen dann bei Umgebungsbedingungen oder auch bei höheren Temperaturen von beispielsweise 40 bis 200°C.

Die genannten Beschichtungsmittel können beispielsweise auf Metalle, Kunststoffe, Keramik, Glas sowie Naturstoffe aufgebracht werden, wobei die genannten Substrate zuvor einer gegebenenfalls notwendigen Vorbehandlung unterzogen worden sein können.

### Ausführungsbeispiele

Sofern nicht abweichend erwähnt sind alle Prozentangaben als Gewichtsprozent zu verstehen.

Die Bestimmung der NCO-Gehalte erfolgte durch Rücktitration von im Überschuss zugesetztem Di-n-butylamin mit Salzsäure.

Die Viskositäten wurden mit einem Rotationsviskosimeter der Firma Haake bei 23°C bestimmt.

Die Farbzahl wurde nach DIN EN 1557 (Hazen) ermittelt.

### Vergleichsbeispiel 1

Zu 275,5 g 1,6-Hexandiisocyanat wurden zunächst 120 mg einer 10 %igen Lösung von Isophtalsäuredichlorid in n-Butylacetat gegeben, danach wurde die Mischung unter Rühren auf 100°C erwärmt. Nun wurden innerhalb von ca. 3 Stunden 327,9 g eines Polypropylenglycols zugegeben, welcher mittels basisch katalysierter Propylenoxid-Polymerisation erhalten worden war (Molgewicht 2000 g/mol, OH-Zahl 56 mg KOH/g, theoretische Funktionalität 2). Die Reaktionsmischung wurde danach solange auf 100°C erwärmt, bis ein NCO-Gehalt von 20,7 % erreicht war. Nun wurde die Temperatur auf 90°C vermindert und die Reaktionsmischung nach Zugabe von 50 mg Zink(II)bis(2-ethylhexanoat) solange gerührt, bis der NCO-Gehalt bei 18,4 % lag. Nach Zugabe von 50 mg Isophtalsäuredichlorid wurde das überschüssige 1,6-Hexandiisocyanat bei ca. 0,5 mbar und 140°C mittels Dünnschichtdestillation entfernt.

Es wurde ein klares, aber deutlich gelb gefärbtes Produkt mit einer Hazen-Farbzahl von 123, einem NCO-Gehalt 5,07 % von und einer Viskosität von 2180 mPas (23°C) erhalten.

### Vergleichsbeispiel 2

470,1 g 1,6-Hexandiisocyanat wurden unter Rühren auf 100°C erwärmt. Nun wurden innerhalb von ca. 3 Stunden 279,8 g eines Polypropylenglycols zugegeben, welcher mittels basisch katalysierter Propylenoxid-Polymerisation erhalten worden war (Molgewicht 1000 g/mol, OH-Zahl 112 mg KOH/g, theoretische Funktionalität 2). Die Reaktionsmischung wurde danach solange auf 100°C erwärmt, bis ein NCO-Gehalt von 28,2 % erreicht war. Nun wurde die Temperatur auf 90°C vermindert und die Reaktionsmischung nach Zugabe von 60 mg Zink(II)bis(2-ethylhexanoat) solange gerührt, bis der NCO-Gehalt bei 25,1 % lag. Nach Zugabe von 40 mg Dibutylphosphat wurde das überschüssige 1,6-Hexandiisocyanat bei ca. 0,5 mbar und 140°C mittels Dünnschichtdestillation entfernt.

Es wurde ein schwach trübes, gelbliches Produkt mit einer Hazen-Farbzahl von 32, einem NCO-Gehalt 9,85 % von und einer Viskosität von 6570 mPas (23°C) erhalten.

### Beispiel 1

Zu 275,5 g 1,6-Hexandiisocyanat wurden zunächst 120 mg einer 10 %igen Lösung von Isophtalsäuredichlorid in n-Butylacetat gegeben, danach wurde die Mischung unter Rühren auf 100°C erwärmt. Nun wurden innerhalb von ca. 3 Stunden 324,3 g eines Polypropylenglycols zugegeben, welcher mittels DMC-Katalyse (Basen-frei) hergestellt worden war (Gehalt ungesättigter Gruppen < 0,01 meq/g, Molgewicht 2000 g/mol, OH-Zahl 56 mg KOH/g, theoretische Funktionalität 2) aufwies. Die Reaktionsmischung wurde danach solange auf 100°C erwärmt, bis ein NCO-Gehalt von 20,7 % erreicht war. Nun wurde die Temperatur auf 90°C vermindert und die Reaktionsmischung nach Zugabe von 50 mg Zink(II)bis(2-ethylhexanoat) solange gerührt, bis der NCO-Gehalt bei 18,4 % lag. Nach Zugabe von 50 mg Isophtalsäuredichlorid wurde das überschüssige 1,6-Hexandiisocyanat bei 0,3 mbar und 140°C mittels Dünnschichtdestillation entfernt.

Es wurde ein klares Produkt mit einer Hazen-Farbzahl von 5, einem NCO-Gehalt 5,15 % von und einer Viskosität von 2560 mPas (23°C) erhalten. Die Farbzahl ist deutlich niedriger, als die des entsprechenden, nach Vergleichsbeispiel 1 erhaltenen Produkts.

### Beispiel 2

502,4 g 1,6-Hexandiisocyanat wurden unter Rühren auf 100°C erwärmt. Nun wurden innerhalb von ca. 3 Stunden 297,5 g eines Polypropylenglycols zugegeben, welcher mittels DMC-Katalyse (Basen-frei) hergestellt worden war (Molgewicht 1000 g/mol, OH-Zahl 112 mg KOH/g, theoretische Funktionalität 2). Die Reaktionsmischung wurde danach solange auf 100°C erwärmt, bis ein NCO-Gehalt von 28,2 % erreicht war. Nun wurde die Temperatur auf 90°C vermindert und die Reaktionsmischung nach Zugabe von 70 mg Zink(II)bis(2-ethylhexanoat) solange gerührt, bis der NCO-Gehalt bei 25,1 % lag. Nach Zugabe von 40 mg Dibutylphosphat wurde das überschüssige 1,6-Hexandiisocyanat bei ca. 0,5 mbar und 140°C mittels Dünnschichtdestillation entfernt.

Es wurde ein farbloses Produkt mit einer Hazen-Farbzahl von 0, einem NCO-Gehalt 8,95 % von und einer Viskosität von 3500 mPas (23°C) erhalten. Die Farbzahl ist deutlich niedriger, als die des entsprechenden, nach Vergleichsbeispiel 2 erhaltenen Produkts.

### Beispiel 3:

Zu 336,0 g 1,6-Hexandiisocyanat wurden zunächst 120 mg einer 10 %igen Lösung von Isophtalsäuredichlorid in n-Butylacetat gegeben, danach wurde die Mischung unter Rühren auf 100°C erwärmt. Nun wurden innerhalb von ca. 3 Stunden 263,8 g eines Polypropylenglycols zugegeben, welcher mittels DMC-Katalyse (Basen-frei) hergestellt worden war (Gehalt ungesättigter Gruppen < 0,01 meq/g, Molgewicht 2000 g/mol, OH-Zahl 56 mg KOH/g, theoretische Funktionalität 2) aufwies. Die Reaktionsmischung wurde danach solange auf 100°C erwärmt, bis ein NCO-Gehalt von 26,1 % erreicht war. Nun wurde die Temperatur auf 90°C vermindert und die Reaktionsmischung nach Zugabe von 50 mg Zink(II)bis(2-ethylhexanoat) solange gerührt, bis der NCO-Gehalt bei 24,3 % lag. Nach Zugabe von 50 mg Isophtalsäuredichlorid wurde das überschüssige 1,6-Hexandiisocyanat bei 0,6 mbar und 140°C mittels Dünnschichtdestillation entfernt.

Es wurde ein farbloses, klares Produkt mit einem NCO-Gehalt 6,45 % und einer Viskosität von 2860 mPas (23°C) erhalten.

## Patentansprüche

1. Verfahren zur Herstellung von Polyisocyanat-Prepolymeren mit Allophanat-Struktureinheiten, bei dem
a) ein oder mehrere Polyisocyanate mit
b) einem oder mehreren Polyetherpolyolen, die einen Gehalt an ungesättigten Endgruppen von kleiner oder gleich 0,02 Milliäquivalenten pro Gramm Polyol, (Bestimmungsmethode ASTM D2849-69), eine Polydispersität (PD = M_{w}/Mₙ) von 1,0 bis 1,5 und/oder eine-OH-Funktionalität von größer oder gleich 1,9 aufweisen,
zu einem NCO-funktionellen Polyurethan-Prepolymer umgesetzt werden, dessen so gebildete Urethangruppen unter weiterer Umsetzung mit
c) Polyisocyanaten, welche verschieden von denen aus a) sein können und
d) Katalysatoren
teilweise oder vollständig allophanatisiert werden und vor, während, und/oder nach der Allophanatisierung
e) gegebenenfalls saure Additive
zugegeben werden.

2. Verfahren zur Herstellung von Polyisocyanat-Prepolymeren mit Allophanat-Struktureinheiten nach Anspruch 1, **dadurch gekennzeichnet, dass** in den Komponenten a) und c) Polyisocyanate vom selben Typ verwendet werden.

3. Verfahren zur Herstellung von Polyisocyanat-Prepolymeren mit Allophanat-Struktureinheiten nach Anspruch 1 oder 2, **dadurch gekennzeichnet, dass** die Polyisocyanate in den Komponenten a) und c) aliphatische und/oder cycloaliphatische Polyisocyanate sind.

4. Polyisocyanat-Prepolymere mit Allophanat-Struktureinheiten erhältlich nach einem Verfahren gemäß einem der Ansprüche 1 bis 3.

5. Verwendung der Polyisocyanat-Prepolymere mit Allophanat-Struktureinheiten nach Anspruch 4 zur Herstellung von Beschichtungen, Verklebungen und/oder Dichtungen.

6. Beschichtungsmittel enthaltend
A) ein oder mehrere Polyisocyanat-Prepolymere mit Allophanat-Struktureinheiten gemäß Anspruch 4 und
B) mindestens ein Di- oder Polyol und/oder
C) mindestens ein lineares und/oder cyclisches, aliphatisches, araliphatisches und/oder aromatisches Di- oder Polyamin.

7. Substrate beschichtet mit Beschichtungen erhältlich aus Polyisocyanat-Prepolymeren mit Allophanat-Strukiureinheiten gemäß Anspruch 4.

## Claims

1. Process for preparing polyisocyanate prepolymers containing allophanate structural units, wherein
a) one or more polyisocyanates are reacted with
b) one or more polyetherpolyols containing less than or equal to 0.02 milliequivalent of unsaturated end groups per gram of polyol (method of determination: ASTM D2849-69) and having a polydispersity (PD = M_{w}/Mₙ) of from 1.0 to 1.5 and/or an OH functionality of greater than or equal to 1.9
to give an NCO-functional polyurethane prepolymer, whose resultant urethane groups are partly or fully allophanatized with further reaction with
c) polyisocyanates, which may be different from those from a), and
d) catalysts
and, before, during and/or after the allophanatization,
e) acidic additives are optionally added.

2. Process for preparing polyisocyanate prepolymers containing allophanate structural units according to Claim 1, **characterized in that** in components a) and c) polyisocyanates of the same type are used.

3. Process for preparing polyisocyanate prepolymers containing allophanate structural units according to Claim 1 or 2, **characterized in that** the polyisocyanates in components a) and c) are aliphatic and/or cycloaliphatic polyisocyanates.

4. Polyisocyanate prepolymers containing allophanate structural units, obtainable by a process according to any one of Claims 1 to 3.

5. Use of the polyisocyanate prepolymers containing allophanate structural units according to Claim 4 for producing coatings, adhesive bonds and/or seals.

6. Coating compositions comprising
A) one or more polyisocyanate prepolymers containing allophanate structural units according to Claim 4 and
B) at least one diol or polyol and/or
C) at least one linear and/or cyclic, aliphatic, araliphatic and/or aromatic diamine or polyamine.

7. Substrates coated with coatings obtainable from polyisocyanate prepolymers containing allophanate structural units according to Claim 4.

## Revendications

1. Procédé de préparation de prépolymères de polyisocyanates avec unités structurales allophanate, dans lequel
a) un ou plusieurs polyisocyanates avec
b) un ou plusieurs polyéther-polyols, qui présentent une teneur en groupes terminaux insaturés inférieure ou égale à 0,02 milliéquivalents par gramme de polyol (procédé de détermination ASTM D2849-69), une polydispersité (PD = Mw/Mn) de 1,0 à 1,5 et/ou une fonctionnalité OH supérieure ou égale à 1,9,
sont mis à réagir en un prépolymère de polyuréthanne à fonction NCO, dont les radicaux uréthanne ainsi formés sont allophanatisés partiellement ou complètement, par réaction avec
c) des polyisocyanates, qui peuvent être différents de ceux de a), et
d) des catalyseurs,
et l'on ajoute le cas échéant, avant, pendant ou après l'étape d'allophanatisation,
e) des additifs acides.

2. Procédé de préparation de prépolymères de polyisocyanates avec unités structurales allophanate selon la revendication 1, **caractérisé en ce que** dans les composants a) et c), on utilise des polyisocyanates de même type.

3. Procédé de préparation de prépolymères de polyisocyanates avec unités structurales allophanate selon la revendication 1 ou 2, **caractérisé en ce que** dans les des polyisocyanates dans les composants a) et c) sont des polyisocyanates aliphatiques et/ou cycloaliphatiques.

4. Prépolymères de polyisocyanates avec unités structurales allophanate obtenus par un procédé selon une des revendications 1 à 3.

5. Utilisation des prépolymères de polyisocyanates avec unités structurales allophanate selon la revendication 4, pour la préparation de revêtements, encollages et/ou garnitures d'étanchéité.

6. Agent de revêtement contenant
A) un ou plusieurs prépolymères de polyisocyanates avec unités structurales allophanate selon la revendication 4,
B) au moins un di- ou polyol, et/ou
C) au moins une di- ou polyamine linéaire et/ou cyclique, aliphatique, araliphatique et/ou aromatique.

7. Substrat revêtu de revêtements, obtenus à partir des prépolymères de polyisocyanates avec unités structurales allophanate selon la revendication 4.
